# EUROPEAN PATENT APPLICATION

(11) **EP 3 964 964 A1**
(43) Date of publication of application: **09.03.2022**
(21) Application number: 21161074.6
(22) Date of filing: 05.03.2021
(51) Int. Cl.: G06F 11/36

(54) **CODE TESTING PRIORITIZATION AND ADAPTATION**

(30) Priority: 08.09.2020 CN 202010935252
(71) Applicant: BEIJING BAIDU NETCOM SCIENCE TECHNOLOGY CO., LTD., No.10 Shangdi 10th Street Haidian District Beijing 100085 (CN)
(72) Inventor: PENG, Yunpeng, Beijing (CN); WANG, Chuqing, Beijing (CN); MU, Hailong, Beijing (CN); LV, Zhiwang, Beijing (CN); PENG, Chengrun, Beijing (CN); GAO, Sai, Beijing (CN); HU, Bo, Beijing (CN)
(74) Representative: J A Kemp LLP

(57) **Abstract**

The present application discloses a data processing method and apparatus, a device, and a storage medium, and relates to the field of testing technologies. The specific implementation solution is: acquiring attribute information of a detection object, where the attribute information includes a type of the detection object and at least one of the following: a level coefficient of the detection object and a validity of the detection object; a processing module, configured to test a tested object by the detection object according to the type of the detection object to obtain a test result, where the test result includes first abnormal information detected in the tested object; the processing module is further configured to update the attribute information of the detection object according to the test result. In the above solution, the attribute information of the detection object needs no manual intervention and can be updated in time, thereby reducing quality risks.

## Description

### TECHNICAL FIELD

The present application relates to the field of computer technologies and, in particular, to a testing technology.

### BACKGROUND

For a computer program product, in order to ensure the quality of the product, quality control is generally carried out through two phases. One phase is a code writing phase, which controls the quality of the code through static analysis and unit testing of the code; and the other phase is to test, after the code is packaged into an executable program product, the function and performance of the product at system-level by a professional tester.

The later the defects are discovered, the higher the repair cost will be. Therefore, it is necessary to find problems in the code writing phase as many as possible. In related art, the code is checked by manually configuring code inspection rules and using the configured inspection rules. However, the efficiency of manually managing the inspection rules is low.

### SUMMARY

A data processing method and apparatus a device, and a storage medium are provided.

According to a first aspect, a data processing method is provided, including:
acquiring attribute information of a detection object, where the attribute information includes a type of the detection object and at least one of the following: a level coefficient of the detection object, and a validity of the detection object;
testing a tested object by the detection object according to the type of the detection object to obtain a test result, where the test result includes first abnormal information detected in the tested object; and
updating the attribute information of the detection object according to the test result.

According to a second aspect, a data processing apparatus is provided, including:
an acquiring module, configured to acquire attribute information of a detection object, where the attribute information comprises a type of the detection object and at least one of the following: a level coefficient of the detection object and a validity of the detection object;
a processing module, configured to test a tested object by the detection object according to the type of the detection object to obtain a test result, where the test result comprises first abnormal information detected in the tested object;
the processing module is further configured to update the attribute information of the detection object according to the test result.

According to a third aspect, an electronic device is provided, including:
at least one processor; and
a memory communicatively connected with the at least one processor; where,
the memory stores instructions executable by the at least one processor, and the instructions are executed by the at least one processor, to cause the at least one processor to execute the method described in any one of the above-mentioned first aspect.

According to a fourth aspect, there is provided a non-transitory computer-readable storage medium having stored thereon computer instructions for causing the computer to execute the method described in any one of the above-mentioned first aspect.

According to a fifth aspect, a computer program product including a computer program is provided, where the computer program is stored in a readable storage medium, at least one processor of an electronic device can read the computer program from the readable storage medium, and the at least one processor executes the computer program to enable the electronic device to execute any one of the data processing method as described above.

The above-mentioned one embodiment of the present application has the following advantages or beneficial effects:
in the embodiments of the present application, attribute information of a detection object is acquired, where the attribute information includes a type of the detection object and at least one of the following: a level coefficient of the detection object and a validity of the detection object; a tested object is tested by the detection object according to the type of the detection object to obtain a test result. In this solution, no manual intervention is required. Attribute information of the detection object can be updated and maintained according to a test situation of the tested object by the detection object, thus assuring high efficiency and achieving timely updating.

It should be understood that what is described in this section is not intended to identify key or important features of embodiments of the present disclosure, nor is it intended to limit the scope of the present disclosure. Other features of the present disclosure will become easy to understand from the following description.

### BRIEF DESCRIPTION OF DRAWINGS

The accompanying drawings are used to better understand the scheme, and do not constitute a limitation to the present application. In which:
FIG. 1 is a schematic diagram of an application scenario provided by an embodiment of the present application;
FIG. 2 is a schematic flowchart of a data processing method provided by an embodiment of the present application;
FIG. 3 is a schematic diagram of a detection object set provided by an embodiment of the present application;
FIG. 4 is a schematic flowchart of a data processing method provided by another embodiment of the present application;
FIG. 5 is a schematic flowchart of a data processing method provided by another embodiment of the present application;
FIG. 6 is a schematic structural diagram of a data processing apparatus provided by an embodiment of the present application; and
FIG. 7 is a block diagram of an electronic device configured to implement the data processing method provided by an embodiment of the present application.

### DESCRIPTION OF EMBODIMENTS

Exemplary embodiments of the present application are described below with reference to the accompanying drawings, including various details of the embodiments of the present application to facilitate understanding, which should be considered as merely exemplary. Therefore, it should be recognized by persons of ordinary skill in the art that various changes and modifications may be made to the embodiments described herein without departing from the scope and spirit of the present application. Also, for the sake of clarity and conciseness, descriptions of well-known functions and structures are omitted in the following description.

First, application scenarios and some related expressions of the embodiments of the present application are explained.

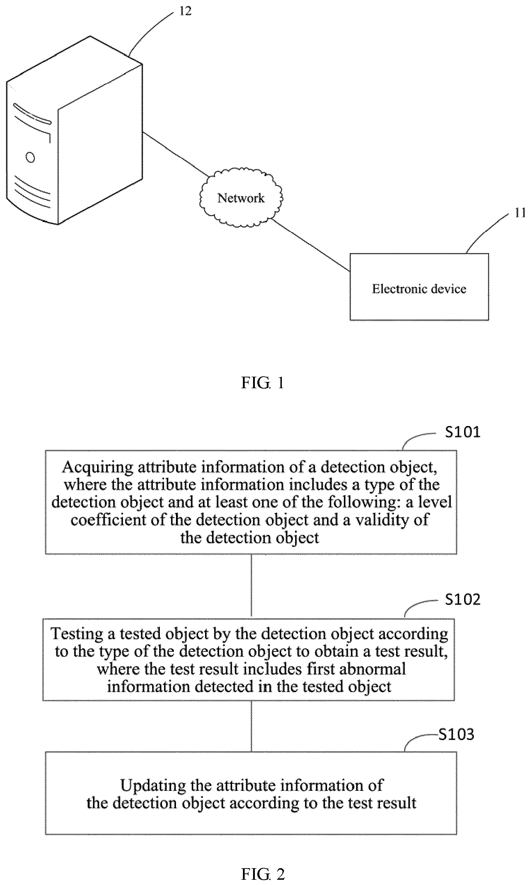

FIG. 1 is a schematic diagram of an application scenario provided by an embodiment of the present application. As shown in FIG. 1, the application scenario of the embodiment of the present application may include, but is not limited to: an electronic device 11 and a server 12. The electronic device includes, for example, a computer.

Where the electronic device 11 and the server 12 may be connected via a network.

For a computer program product, in order to ensure the quality of the product, quality control is generally carried out through two phases. One phase is a code writing phase, which controls the quality of the code through static analysis and unit testing of the code; and the other phase is to test, after the code is packaged into an executable program product, the function and performance of the product at system-level by a professional tester.

The later the defects are discovered, the higher the repair cost will be. Therefore, it is necessary to find problems in the code writing phase as many as possible. In related art, the code is checked by manually configuring the code inspection rules and using the configured inspection rules. However, the efficiency of manually managing the inspection rules is low.

Therefore, in the method provided by the embodiments of the present application, a tested object is tested by a detection object to obtain a test result. No manual intervention is required. Attribute information of the detection object can be updated and maintained according to a test situation of the tested object by the detection object, thus assuring high efficiency and achieving timely updating.

The method provided in the embodiments of the present application may be implemented by an electronic device such as a processor executing corresponding software codes, or by an electronic device executing the corresponding software codes while performing data interaction with a server.

The technical schemes of the present application are described in detail below with specific embodiments. The following specific embodiments may be combined with each other, and the same or similar concepts or processes may not be repeated in some embodiments.

FIG. 2 is a schematic flowchart of a method for awakening an APP target page provided by an embodiment of the present application. As shown in FIG. 2, the method provided by the present embodiment includes the following steps:
S101: acquiring attribute information of a detection object, where the attribute information includes a type of the detection object and at least one of the following: a level coefficient of the detection object and a validity of the detection object.

Specifically, the detection object in the embodiment of the present application is, for example, an inspection rule for detecting the quality of a computer program code.

For example, the inspection rules include: naming conventions, length restriction rules, loop inspection rules, and so on.

Where the attribute information of the detection object includes the type of the detection object and at least one of the following: the level coefficient and the validity.

The type is, for example, an online type or an offline type. The detection object of the online type may refer to the detection object used by a user to test the tested object, such as the detection object used to check the quality of the computer program code. The detection object of the offline type may refer to a standby detection object; the level coefficient may be a coefficient indicating the level of the classification, the level of the priority, etc. The validity is used for indicating whether the detection object can detect abnormal information of the tested object, and the validity can be expressed by a validity score.

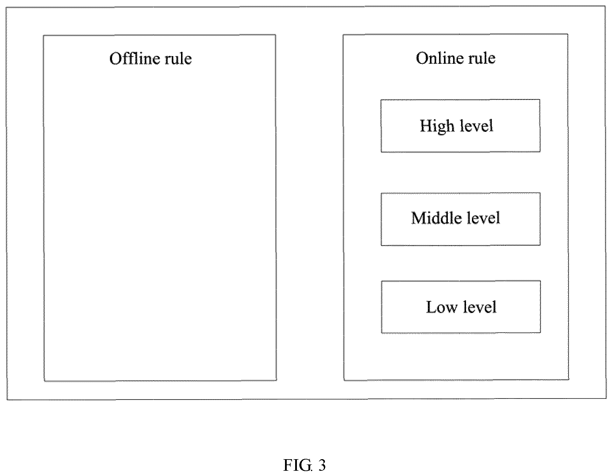

As shown in FIG. 3, the detection object may be divided into two parts, one is rules for the online type, and the other is rules for the offline type. The rules for the online type have respective corresponding level coefficients, such as a low level, a middle level and a high level, and can also be quantified by numerical values, where the level can, for example, correspond to the level of abnormal information detected by the detection object. For example, the more serious the code problem caused by the detected abnormal information is, the higher the level becomes, or the higher the user's intention to repair the detected abnormal information is, the higher the level becomes.

S102: testing a tested object by the detection object according to the type of the detection object to obtain a test result, where the test result includes first abnormal information detected in the tested object.

Specifically, in the embodiments of the present application, the tested object is, for example, a computer program code, and the tested object is tested by the detection object, for example, the computer program code is tested through inspection rules to obtain the first abnormal information, such as abnormal information in the computer program code, such as incorrect naming of a parameter, incorrect number of function input parameters, incorrect loop nesting, etc.

S103: updating the attribute information of the detection object according to the test result.

Specifically, the type, the level coefficient, the validity and the like of the detection object can be updated, for example, the detection object of the online type is updated to the detection object of the offline type, or the detection object of the offline type is updated to the detection object of the online type; the level coefficient is increased or decreased; the validity is increased or decreased, etc.

For example, updating the attribute information of the detection object according to whether the test result contains the first abnormal information, if the first abnormal information is contained therein, it means that the detection object can detect the abnormal information, the level coefficient can be increased, the validity can be increased, or the type can be changed (for example, updating the offline type as the online type). Alternatively, the attribute information of the detection object is updated according to the content of the first abnormal information and the information of the tested object. For example, if the first abnormal information indicates that the naming of the code at a certain position is not standardized, the validity of the detection object can be increased.

According to the data processing method of the present embodiment, the attribute information of the detection object is acquired, where the attribute information includes the type of the detection object and at least one of the following: the level coefficient of the detection object and the validity of the detection object; the tested object is tested by the detection object to obtain the test result according to the type of the detection object. In this scheme, no manual intervention is required. Attribute information of the detection object can be updated and maintained according to a test situation of the tested object by the detection object, thus assuring high efficiency and achieving timely updating.

In an embodiment, step S102 may be implemented in the following manner:
determining the tested object according to the type of the detection object; and
testing the tested object by the detection object to obtain the test result.

In an embodiment, if the type of the detection object is an online type, the tested object is a first object or a second object, where the first object is any to-be-tested object, and the second object is an abnormal object.

In another embodiment, if the type of the detection object is an offline type, the tested object is the second object, where the second object is an abnormal object.

Specifically, it is possible to define an initial collection of detection objects of the online and offline types, the detection objects may be for example, inspection rules for detecting the quality of a computer program code. The detection object of the online type refers to the detection object that a user can use to detect the quality of the computer program code, and the detection object of the offline type can refer to a standby detection object, which can be changed to the online type under certain conditions.

The tested object is selected based on the type of the detection object. If the detection object is a detection object of the online type, the tested object may be the first object or the second object, where the first object is any to-be-tested object, and the second object is an abnormal object; if the detection object is a detection object of the offline type, the tested object may be the second object.

Any to-be-tested object, for example, refers to the computer program code to be tested, and the computer program code may not be an executable program product. That is, any to-be-tested object generally does not need to be tested with the detection object of the offline type, but simply needs to be tested with the detection object of the online type to determine whether there is an abnormality, and then the attribute information of these detection objects is updated.

An abnormal object refers to a computer program code that is found to be abnormal after testing. For example, a test engineer tests the computer program code by using a testing tool and further testing of the abnormal object with the detection object can be used for updating the attribute information of the detection object, and the abnormal performance of an execution result of the computer program code can also be associated with the problem statically checked by the inspection rules, thereby improving developers' intention to repair the abnormal code.

Further, the tested object selected based on the type of the detection object is tested to obtain the test result, and then the attribute information of the detection object (such as the type, the level coefficient, and the validity of the detection object, and the like) is updated according to the test result. For example, the detection object of the online type is updated to the detection object of the offline type, or the detection object of the offline type is updated to the detection object of the online type; the level coefficient is increased or decreased, etc.

In the above-mentioned embodiments, the tested object is determined according to the type of the detection object. Different types may correspond to different tested objects; the different tested objects are tested by the detection objects to obtain test results, and further the attribute information of the detection objects is updated and maintained according to the test results of the tested object obtained by using the detection object, thus assuring high efficiency and achieving timely updating.

In an embodiment, for the detection object of the online type, if the tested object is the first object, that is, any to-be-tested object, step S103 can be implemented in the following manner:
acquiring a user operation corresponding to the first abnormal information; and
updating the type and/or the level coefficient of the detection object according to the user operation.

Specifically, when the user acquires the first abnormal information, the user can perform some operations for the first abnormal information, such as a repair operation corresponding to the first abnormal information; an operation indicating misreporting of the first abnormal information or an operation indicating repair-free of the first abnormal information, etc.

In an embodiment, the user operation includes any one of the following operations:
a repair operation corresponding to the first abnormal information;
an operation indicating misreporting of the first abnormal information; and
an operation indicating repair-free of the first abnormal information.

Specifically, for a defect detected by the detection object of the online type, the user can choose to repair the defect, or skip the defect by clicking the misreporting or repair-free operation, that is, the defect will not be processed. The misreporting operation means that the user believes that the defect is inaccurate. And the repair-free operation means that the user believes that the defect is accurate, but does not fix the defect temporarily for some reason.

The type and the level coefficient of the detection object are updated according to the user operation. For example, if the user chooses to repair the first abnormal information, the user operation is a repair operation, indicating that the abnormal information detected by the detection object is valid abnormal information, and that the user chooses to repair indicates that the abnormal information may cause serious problems, and the level coefficient of the detection object may be increased, e.g., the level of the detection object is increased.

For example, if the user believes that the first abnormal information is misreported information, the user operation is an operation indicating the misreporting, which means that the abnormal information detected by the detection object is invalid abnormal information, and the type of the detection object may be changed, for example, from the online type to the offline type; or the level coefficient of the detection object can be adjusted, for example, the level of the detection object is decreased.

For example, if the user believes that the first abnormal information may be repaired-free, the first abnormal information may not cause serious problems, or the user cannot repair it at the moment, then the user operation is an operation indicating repair-free, which means that the detection object may not be very important, and the type of the detection object may be changed, for example, from the online type to the offline type; or the level coefficient of the detection object can be adjusted, for example, the level of the detection object is decreased.

In the above-mentioned embodiment, the user operation corresponding to the first abnormal information is acquired according to the first abnormal information in the test result when the tested object is tested; and the type and the level coefficient of the detection object are then updated according to the user operation, thus assuring high efficiency and achieving timely updating. For the detection object that the user does not pay attention to, the type and the level coefficient of the detection object can be updated, thereby reducing the interference of the detection result to a developer in the coding stage, meanwhile, the detection object approved by the developer will get higher approval.

In an embodiment, if the user operation is the repair operation corresponding to the first abnormal information, the step of "updating the type and the level coefficient of the detection object" can be specifically implemented in the following manner:
acquiring a repair rate corresponding to the repair operation; and
increasing the level coefficient corresponding to the detection object when the repair rate is greater than or equal to a first threshold and the level coefficient of the detection object is smaller than a second threshold.

Specifically, with respect to the first abnormal information detected by the same detection object in different first objects, different users may choose different operations. For example, some users choose repair operations, some users choose to perform the repair-free operation, and some users choose to perform the misreporting operation.

For multiple user operations, the repair rate corresponding to repair operations is determined, for example, one detection object detected abnormal information in all three tested objects, and if the user selects two repair operations and one operation indicating repair-free, the repair rate is thus 2/3 and the repair-free rate is 1/3; the level coefficient corresponding to the detection object is increased when the repair rate is greater than or equal to the first threshold and the level coefficient of the detection object is smaller than the second threshold, indicating that valid abnormal information can be detected by the detection object, and the detection object is thus more important.

In an embodiment, if the repair rate is smaller than the first threshold, and the level coefficient of the detection object is greater than a preset threshold, the level coefficient corresponding to the detection object can also be decreased; if the level coefficient of the detection object is smaller than or equal to the preset threshold, the type of the detection object can be updated to the offline type.

Further, the detection object of the offline type can also be optimized, so that valid abnormal information can be detected subsequently.

Where the second threshold is different from the preset threshold, and the second threshold is greater than the preset threshold.

For example, the second threshold and the preset threshold are respectively upper and lower limits of the level coefficient.

In the above-mentioned embodiment, the repair operation corresponding to the first abnormal information by the user is acquired according to the first abnormal information in the test result when the tested object is tested; and then the repair rate corresponding to the repair operation is acquired according to the repair operation; the type and the level coefficient of the detection object are updated according to the repair rate. For example, that increasing the level coefficient corresponding to the detection object can be beneficial for finding defects in the code static inspection stage as many as possible, thus reducing the probability of defects flowing into the test phase, reducing costs of defects repair, and improving the efficiency of product development as well as reducing quality risks.

In an embodiment, the user operation is the operation indicating misreporting of the first abnormal information; the step of "updating the type and the level coefficient of the detection object" can be specifically implemented in the following manner:
determining an abnormality misreporting rate according to the user operation; and
reducing the level coefficient of the detection object or updating the type of the detection object to the offline type when the abnormality misreporting rate is greater than or equal to a third threshold.

Specifically, for multiple user operations, the abnormality misreporting rate the corresponding to operations indicating the misreporting is determined. For example, one detection object detected abnormal information in all three tested objects, and if the user selects two repair operations and one operation indicating the misreporting, the repair rate is thus 2/3 and the abnormality misreporting rate is 1/3; the level coefficient of the detection object is decreased when the abnormality misreporting rate is greater than or equal to the third threshold, or the type of the detection object is updated to the offline type if the level coefficient is already equal to the lower limit corresponding to the level coefficient.

In the above-mentioned embodiment, the operation which indicates the misreporting and corresponds to the first abnormal information by the user is acquired according to the first abnormal information in the test result when the tested object is tested; and then the abnormality misreporting rate is acquired according to the operation indicating the misreporting; and the type and the level coefficient of the detection object are updated according to the abnormality misreporting rate, e.g., the level coefficient of the detection object is decreased or the type of the detection object is updated to the offline type. For detection objects that the user does not pay attention to, the type and the level coefficient of detection object can be updated, thereby reducing the interference of the detection result to a developer in the coding stage, meanwhile, the detection object approved by the developer will get higher approval.

In an embodiment, the user operation is the operation indicating repair-free of the first abnormal information; the step of "updating the type and the level coefficient of the detection object" can be specifically implemented in the following manner:
determining a repair-free rate according to the user operation; and
reducing the level coefficient of the detection object or updating the type of the detection object to the offline type when the repair-free rate is greater than or equal to a fourth threshold.

Specifically, for multiple user operations, the abnormality misreporting rate corresponding to operations indicating the misreporting is determined. For example, one detection object detected abnormal information in all four tested objects, and if the user selects two repair operations, one operation indicating the misreporting and one operation indicating repair-free, the repair rate is thus 2/4, the abnormality misreporting rate is 1/4 and the repair-free rate is 1/4; when the repair-free rate is greater than or equal to the fourth threshold, the level coefficient of the detection object is decreased, or the type of the detection object is updated to the offline type if the level coefficient is already equal to the lower limit corresponding to the level coefficient.

Where the first threshold, the second threshold, the third threshold and the fourth threshold may be same or different.

In the above-mentioned embodiment, the operation which indicates repair-free and corresponds to the first abnormal information by the user is acquired according to the first abnormal information in the test result when the tested object is tested; and then the repair-free rate is acquired according to the operation indicating repair-free; and the type and the level coefficient of the detection object are updated according to the repair-free rate, e.g., the level coefficient of the detection object is decreased or the type of the detection object is updated to the offline type. For the detection object that the user does not pay attention to, the type and the level coefficient of detection object can be updated, thereby reducing the interference of the detection result to a developer in the coding stage, meanwhile, the detection object approved by the developer will get higher approval.

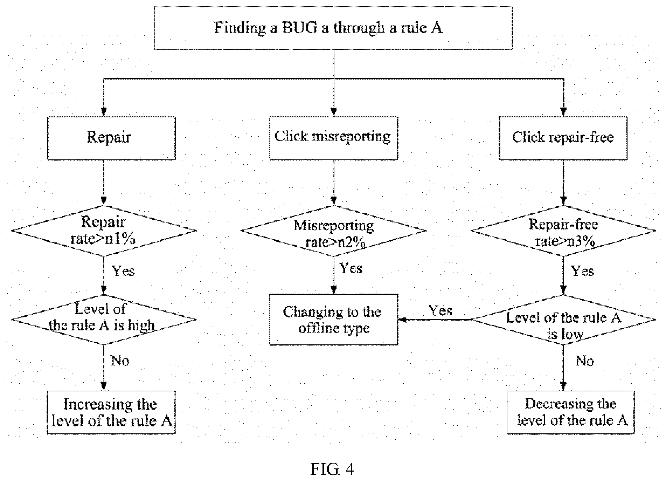

Exemplarily, as shown in FIG. 4, assuming that the type of rule A is an online type, and a BUG a (that is, the first abnormal information) is found through a rule A. When the user operation is a repair operation, it is determined whether the repair rate is greater than a threshold n1%, and if yes, the level of the rule A is increased when the level of the rule A is not high; when the user operation is an operation of clicking misreporting, it is determined whether the misreporting rate is greater than a threshold n2%, and if yes, the type of the rule A to the offline type is changed, or the level of the rule A is decreased; when the user operation is an operation of clicking repair-free, it is determined whether the repair-free rate is greater than a threshold n3%, and if yes, the type of the rule A is changed to the offline type if the level of the rule A is low, or the level of the rule A is decreased.

In an embodiment, for the detection object of the online type, if the tested object is the second object, step S103 can be implemented in the following manner:
acquiring second abnormal information of the second object, where the second abnormal information is marked abnormal information for the second object; and
updating the validity of the detection object according to the first abnormal information and the second abnormal information, and updating the level coefficient and/or the type of the detection object according to the updated validity of the detection object.

Specifically, the attribute information of the detection object may also be updated according to the marked abnormal information for the second object. The marked abnormal information is, for example, abnormal information obtained by a test engineer using a test tool to test the second object.

If the second object has the marked second abnormal information, then the second object is further tested using a detection object, for example, certain inspection rules of the online type are used for testing. If the first abnormal information is detected, it means that the detection object can detect the abnormal information, and then the validity of the detection object is updated. For example, the validity is expressed by a validity score, for example, the validity score is increased; further, the level coefficient and/or the type of the detection object is updated according to the updated validity of the detection object, for example, the level coefficient of the detection object is increased if the validity score is greater than a certain preset threshold.

Further, it can also be determined whether the first abnormal information and the second abnormal information are the same. If they are the same, it means that the detection object is a valid detection object, then the validity score can thus be increased by a first magnitude.

If they are different, the validity score is increased or decreased by a second magnitude, where the second magnitude is smaller than the first magnitude; further, the level coefficient and/or the type of the detection object is updated according to the updated validity of the detection object.

In another embodiment, if the second object has the marked second abnormal information, then the second object is further tested with a detection object. If the first abnormal information is not detected, it means that the detection object is an invalid detection object. For example, the validity score is decreased; further, the level coefficient and/or the type of the detection object is updated according to the updated validity of the detection object, for example, if the validity score is smaller than a certain preset threshold, the level coefficient of the detection object is decreased, and/or, the type of the detection object being the online type is updated to the offline type.

In the above-mentioned embodiment, the second abnormal information of the second object is acquired, where the second abnormal information is marked abnormal information for the second object; the validity of the detection object is updated according to the first abnormal information and the second abnormal information, and the level coefficient and/or the type of the detection object is updated according to the updated validity of the detection object. For the detection object that the user does not pay attention to, the type and the level coefficient of the detection object can be updated, thereby reducing the interference of the detection result to a developer in the coding stage, meanwhile, the detection object approved by the developer will get higher approval; moreover, in the static code inspection stage, defects can be found as many as possible, thereby reducing the probability of defects flowing into the test phase, reducing costs of defect repair, and improving the efficiency of product development as well as reducing quality risks.

In another embodiment, for the detection object of the offline type, if the tested object is the second object, step S103 can be implemented in the following manner:
acquiring third abnormal information of the second object, where the third abnormal information is marked abnormal information for the second object;
updating the validity of the detection object according to the first abnormal information and the third abnormal information; and
updating the type of the detection object, if the updated validity of the detection object is greater than or equal to a fifth threshold.

Specifically, the attribute information of the detection object may also be updated according to the marked abnormal information for the second object. The marked abnormal information is, for example, abnormal information obtained by a test engineer using a test tool to test the second object.

If the second object has the marked third abnormal information, then the second object is further tested with the detection object, e.g., certain inspection rules of the offline type are used for testing. If the first abnormal information is detected, it means that the detection object can detect the abnormal information, and then the validity of the detection object is updated. For example, the validity is expressed by a validity score, for example, the validity score is increased; further, the type of the detection object is updated according to the updated validity of the detection object, for example, the offline type of the detection object is updated to the online type if the validity score is greater than a certain preset threshold.

Further, it can also be determined whether the first abnormal information and the third abnormal information are the same. If they are the same, it means that the detection object is a valid detection object, then the validity score can thus be increased by a first magnitude.

If they are different, the validity score is increased or decreased by a second magnitude, where the second magnitude is smaller than the first magnitude; further, the type the detection object is updated according to the updated validity of the detection object.

In another embodiment, if the second object has the marked third abnormal information, then the second object is further tested with the detection object. If the first abnormal information is not detected, it means that the detection object is an invalid detection object, for example, the validity score is decreased.

In the above-mentioned embodiment, the third abnormal information of the second object is acquired, where the third abnormal information is the marked abnormal information for the second object; the validity of the detection object is updated according to the first abnormal information and the third abnormal information, and the type of the detection object is updated according to the updated validity of the detection object. For the detection object that the user does not pay attention to, the type and the level coefficient of the detection object can be updated, thereby reducing the interference of the detection result to a developer in the coding stage, meanwhile, the detection object approved by the developer will get higher approval; moreover, in the static code inspection stage, defects can be found as many as possible, thus reducing the probability of defects flowing into the test link, reducing costs of defect repair, and improving the efficiency of the product development as well as reducing quality risks.

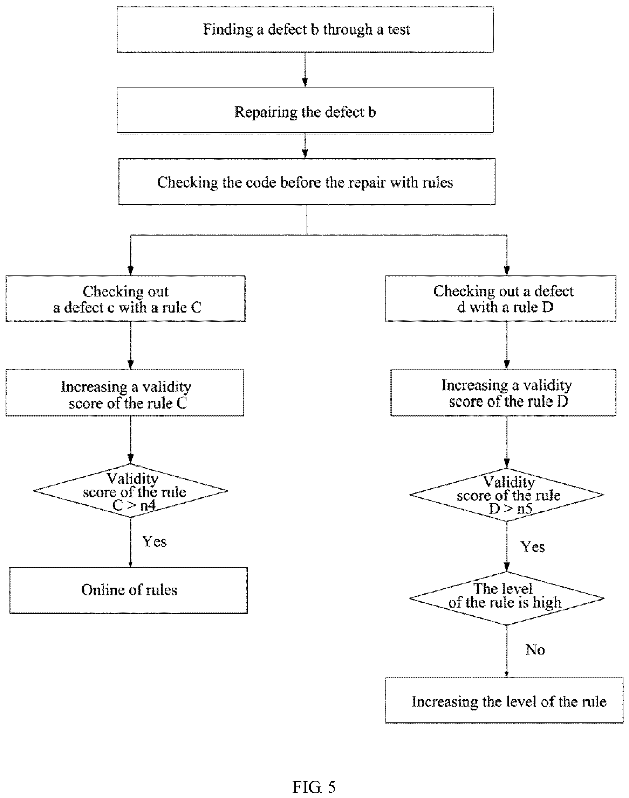

Exemplarily, as shown in FIG. 5, when a test engineer finds a defect b during the test, the computer program code with the defect b is repaired, and the code before the repair is checked with rules. A validity score of a rule C is increased if a defect c is checked out with the offline rule C, then if the validity score of the rule C is greater than a threshold n4, a type of the rule C is changed to the online type, where the defect c and the defect b may be the same defect or different defects, then if the defects are the same, an incremental magnitude of the validity score can be increased, for example, increased by 2, and the incremental magnitude of the validity score can be unchanged or reduced if the defects are the different, for example, increased by 1 or 1.5; a validity score of a rule D is increased if a defect d is checked out with the online rule D, then if the validity score of the rule D is greater than a threshold n5, the level of the rule D is increased, where the defect d and defect b may be the same defect or different defects, then the incremental magnitude of the validity score can be increased if the defects are the same, for example, increased by 2, and the incremental magnitude of the validity score can be unchanged or reduced if the defects are the different, for example, increased by 1 or 1.5. Where the code before the repair is checked, and in order to improve efficiency, it is possible to simply check the difference between the code before the repair and after the repair.

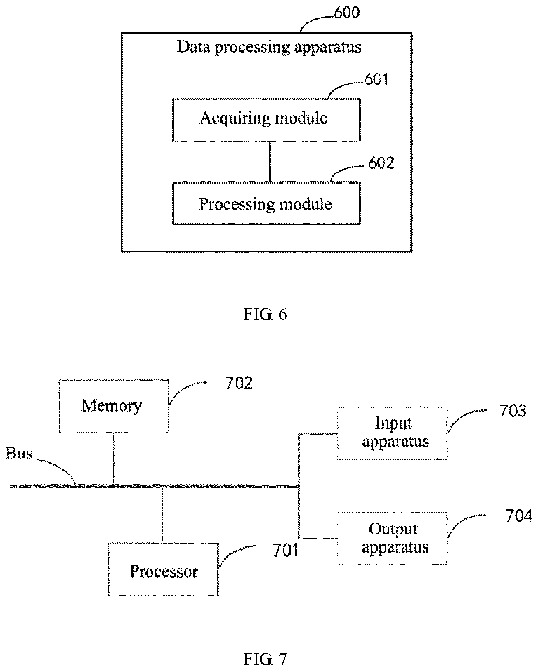

FIG. 6 is a schematic structural diagram of a data processing apparatus provided by an embodiment of the present application. As shown in FIG. 6, the data processing apparatus 600 provided by an embodiment of the present application may include: an acquiring module 601 and a processing module 602.

Where the acquiring module 601 is configured to acquire attribute information of the detection object, and the attribute information includes a type of the detection object, and at least one of the following: a level coefficient of the detection object and a validity of the detection object;
the processing module 602 is configured to test a tested object by the detection object according to the type of the detection object to obtain a test result, where the test result includes first abnormal information detected in the tested object; and
the processing module 602 is further configured to update the attribute information of the detection object according to the test result.

In a possible implementation manner, the processing module 602 is specifically configured to:
determine the tested object according to the type of the detection object; and
test the tested object by the detection object to obtain the test result.

In a possible implementation manner, if the type of the detection object is an online type, then the detection object is a first object or a second object, where the first object is any to-be-tested object and the second object is an abnormal object.

In a possible implementation manner, the tested object is the first object; and the processing module 602 is specifically configured to:
acquire a user operation corresponding to the first abnormal information; and
update the type and/or the level coefficient of the detection object according to the user operation.

In a possible implementation manner, the user operation includes any one of the following operations:
a repair operation corresponding to the first abnormal information;
an operation indicating misreporting of the first abnormal information; and
an operation indicating repair-free of the first abnormal information.

In a possible implementation manner, the user operation is a repair operation corresponding to the first abnormal information; and the processing module 602 is specifically configured to:
acquire a repair rate corresponding to the repair operation; and
increase the level coefficient corresponding to the detection object when the repair rate is greater than or equal to a first threshold and the level coefficient of the detection object is smaller than a second threshold.

In a possible implementation manner, the user operation is the operation indicating misreporting of the first abnormal information; and the processing module 602 is specifically configured to:
determine an abnormality misreporting rate according to the user operations; and
reduce the level coefficient of the detection object or update the type of the detection object to an offline type when the abnormality misreporting rate is greater than or equal to a third threshold.

In a possible implementation manner, the user operation is the operation indicating repair-free of the first abnormal information; and the processing module 602 is specifically configured to:
determine a repair-free rate according to user operations; and
reduce the level coefficient of the detection object or update the type of the detection object to an offline type when the repair-free rate is greater than or equal to a fourth threshold.

In a possible implementation manner, the tested object is the second object; and the processing module 602 is specifically configured to:
acquire second abnormal information of the second object, where the second abnormal information is marked abnormal information for the second object; and
update the validity of the detection object according to the first abnormal information and the second abnormal information, and update the level coefficient and/or the type of the detection object according to the updated validity of the detection object.

In a possible implementation, if the type of the detection object is an offline type, the tested object is a second object, and the second object is an abnormal object.

In a possible implementation manner, the processing module 602 is specifically configured to:
acquire third abnormal information of the second object, where the third abnormal information is marked abnormal information for the second object;
update the validity of the detection object according to the first abnormal information and the third abnormal information; and
update the type of the detection object if the updated validity of the detection object is greater than or equal to a fifth threshold.

The apparatus provided in this embodiment is configured to implement the technical solutions in the above-mentioned data processing method embodiment of the present application, and its technical principle and technical effects are similar, and will not be repeated here.

The present application also provides an electronic device and a readable storage medium according to an embodiment of the present application.

According to the embodiments of the present application, the present application also provides a computer program product including a computer program, the computer program is stored in a readable storage medium, at least one processor of an electronic device can read the computer program from the readable storage medium, and the at least one processor executes the computer program to enable the electronic device to execute the solutions provided by any one of the above embodiments.

FIG. 7 is a block diagram of an electronic device configured to implement the data processing method provided by an embodiment of the present application. Electronic devices are intended to represent various forms of digital computers, such as laptop computers, desktop computers, workstations, personal digital assistants, servers, blade servers, mainframe computers, and other suitable computers. Electronic devices may also represent various forms of mobile devices, such as personal digital assistants, cellular phones, smart phones, wearable devices, and other similar computing apparatuses. The components shown herein, their connections and relationships, and their functions are merely examples, and are not intended to limit the implementation of the present application described and/or require the implementation of the present application herein.

As shown in FIG. 7, the electronic device includes: one or more processors 701, a memory 702, and interfaces for connecting various components including a high-speed interface and a low-speed interface. The various components are connected to each other by using different buses, and can be installed on a common main board or installed in other ways as required. The processor may process instructions executed in the electronic device, including instructions stored in or on the memory to display graphical information of the GUI (Graphical User Interface) on an external input/output apparatus (such as a display device coupled to an interface). In other embodiments, multiple processors and/or multiple buses may be used with multiple memories if necessary. Similarly, multiple electronic devices can be connected, and each device provides part of the necessary operations (for example, as a server array, a group of blade servers, or a multi-processor system). A processor 701 is taken as an example in FIG. 7.

The memory 702 is a non-transitory computer-readable storage medium provided by the present application. Where the memory stores instructions executable by at least one processor, and the instructions, when executed, cause the at least one processor to perform the data processing method provided by the present application. The non-transitory computer-readable storage medium of the present application stores computer instructions, and the computer instructions are configured to enable a computer to execute the data processing method provided by the present application.

As a non-transitory computer-readable storage medium, the memory 702 can be used to store non-transitory software programs, non-transitory computer-executable programs and modules, such as program instructions/modules corresponding to the data processing method in the embodiments of the present application (for example, the acquiring module 601 and the processing module 602 shown in FIG. 6). The processor 701 executes various functional applications and data processing of the server by running non-transitory software programs, instructions, and modules stored in the memory 702, that is, realizing the data processing method in the above-mentioned method embodiments.

The memory 702 may include a program storage area and a data storage area. The program storage area may store an operating system and an application program required by at least one function; the data storage area may store date created according to the use of the electronic device for data processing, etc. In addition, the memory 702 may include a high-speed random access memory, and may also include a non-transitory memory, such as at least one magnetic disk storage device, a flash memory device, or other non-transitory solid-state storage devices. In some embodiments, the memory 702 may optionally include memories remotely provided with respect to the processor 701, and these remote memories may be connected to the electronic device for data processing via a network. Examples of the above-mentioned networks include, but are not limited to, the Internet, corporate intranets, local area networks, mobile communication networks, and combinations thereof.

The electronic device for the data processing method may further include: an input apparatus 703 and an output apparatus 704. The processor 701, the memory 702, the input apparatus 703 and the output apparatus 704 may be connected by a bus or other means. The connection via a bus is taken as an example in FIG. 7.

The input apparatus 703 can receive input digital or character information, and generate key signal input related to user settings and function control of the electronic device for data processing, such as touch screen, keypad, mouse, track pad, touchpad, indicating rod, one or more mouse buttons, trackball, joystick and other input apparatuses. The output apparatus 704 may include a display device, an auxiliary lighting apparatus (for example, LED (light emitting diode)), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various implementations of the systems and techniques described herein may be implemented in digital electronic circuit systems, integrated circuit systems, application specific ASICs (application specific integrated circuits), computer hardware, firmware, software, and/or combinations thereof. These various implementations may include: being implemented in one or more computer programs that may be executed and/or interpreted on a programmable system including at least one programmable processor. The programmable processor may be a dedicated or general-purpose programmable processor and can receive data and instructions from the storage system, at least one input device, and at least one output device, and transmit data and instructions to the storage system, the at least one input apparatus, and the at least one output apparatus.

These computer programs (also known as programs, software, software applications, or codes) include machine instructions of programmable processors, and can be implemented using high-level procedures and/or object-oriented programming languages, and/or assembly/machine languages. As used herein, the terms "machine-readable medium" and "computer-readable medium" refer to any computer program product, device, and/or apparatus (for example, magnetic disks, optical disks, memories, programmable logic devices (PLD)) configured to provide machine instructions and/or data to a programmable processor, including machine-readable media that receive machine instructions as machine-readable signals. The term "machine-readable signal" refers to any signal for providing machine instructions and/or data to a programmable processor.

To provide interaction with a user, the systems and techniques described herein can be implemented on a computer having: a display apparatus for displaying information to a user (for example, a CRT (cathode ray tube) or an LCD (liquid crystal display) monitor); and a keyboard and a pointing device (for example, a mouse or a trackball) through which the user can provide input to the computer. Other types of apparatus can also be used to provide interaction with the user; for example, the feedback provided to the user can be any form of sensory feedback (for example, visual feedback, auditory feedback or tactile feedback); and can receive input from the user in any form (including acoustic input, voice input or tactile input).

The systems and technologies described herein may be implemented in a computing system including background components (for example, as a data server), or a computing system including middleware components (for example, an application server), or a computing system including front-end components (for example, a user computer with a graphical user interface or a web browser through which users can interact with implementations of the systems and technologies described herein), or including the computing system including any combination of such background components, middleware components, or front-end components. The components of the system can be connected to each other through digital data communication (for example, a communication network) in any form or medium. Examples of communication networks include local area networks (LANs), wide area networks (WANs) and the Internet.

The computing system may include a client and a server. The client and server are generally far away from each other and usually interact through a communication network. The relationship between the client and the server is generated through computer programs running on the corresponding computers and having a client-server relationship with each other.

According to the technical solution of the embodiment of the present application, attribute information of a detection object is acquired, where the attribute information includes a type of the detection object and at least one of the following: a level coefficient of the detection object and a validity of the detection object; a tested object is tested by the detection object according to the type of the detection object to obtain a test result. In this scheme, no manual intervention is required. Attribute information of the detection object can be updated and maintained according to a test situation of the tested object by the detection object, thus assuring high efficiency and achieving timely updating.

The present application also provides a data processing method according to an embodiment of the present application, including:
acquiring attribute information of a detection object;
testing a tested object by the detection object to obtain a test result, where the test result includes first abnormal information detected in the tested object; and
updating the attribute information of the detection object according to the test result.

In an implementation manner, testing the tested object by the detection object according to the attribute information of the detection object to obtain the test result.

In an implementation manner, determining the tested object according to the type of the detection object; and
testing the tested object by the detection object to obtain the test result.

Technical principles and technical effects of the method in this embodiment are similar to the technical solutions in the foregoing method embodiments of the present application, which will not be repeated here.

It should be understood that the various forms of processes shown above can be used to reorder, add or delete steps. For example, the steps described in the present application may be performed in parallel, sequentially, or in a different order, as long as the desired result of the technical scheme disclosed in the present application may be achieved, this is not limited herein.

The above-mentioned specific implementations do not constitute a limitation on the scope of protection of the present application. Those skilled in the art should understand that various modifications, combinations, sub-combinations and substitutions may be made according to design requirements and other factors. Any modification, equivalent substitutions and improvements made within the spirits and principles of the present application shall be included in the protection scope of the present application.

## Claims

1. A data processing method, comprising:
acquiring (S101) attribute information of a detection object, wherein the attribute information comprises a type of the detection object and at least one of the following: a level coefficient of the detection object and a validity of the detection object;
testing (S102) a tested object by the detection object according to the type of the detection object to obtain a test result, wherein the test result comprises first abnormal information detected in the tested object; and
updating (S103) the attribute information of the detection object according to the test result.

2. The method according to claim 1, wherein the testing (S102) a tested object by the detection object according to the type of the detection object to obtain a test result comprises:
determining the tested object according to the type of the detection object; and
testing the tested object by the detection object to obtain the test result.

3. The method according to claim 2, wherein if the type of the detection object is an online type, then the tested object is a first object or a second object, wherein the first object is any to-be-tested object and the second object is an abnormal object.

4. The method according to claim 3, wherein the detection object is the first object; and the updating (S103) the attribute information of the detection object according to the test result comprises:
acquiring a user operation corresponding to the first abnormal information; and
updating the type and/or the level coefficient of the detection object according to the user operation.

5. The method according to claim 4, wherein the user operation comprises any one of the following operations:
a repair operation corresponding to the first abnormal information;
an operation indicating misreporting of the first abnormal information; and
an operation indicating repair-free of the first abnormal information.

6. The method according to claim 5, wherein the user operation is the repair operation corresponding to the first abnormal information; and the updating the type and the level coefficient of the detection object according to the user operation comprises:
acquiring a repair rate corresponding to the repair operation; and
increasing the level coefficient corresponding to the detection object when the repair rate is greater than or equal to a first threshold and the level coefficient of the detection object is smaller than a second threshold.

7. The method according to claim 5, wherein the user operation is the operation indicating misreporting of the first abnormal information; and the updating the type and the level coefficient of the detection object according to the user operation comprises:
determining an abnormality misreporting rate according to the user operation; and
reducing the level coefficient of the detection object or updating the type of the detection object to an offline type when the abnormality misreporting rate is greater than or equal to a third threshold.

8. The method according to claim 5, wherein the user operation is the operation indicating repair-free of the first abnormal information; and the updating the type and the level coefficient of the detection object according to the user operation comprises:
determining a repair-free rate according to the user operation; and
reducing the level coefficient of the detection object or updating the type of the detection object to an offline type when the repair-free rate is greater than or equal to a fourth threshold.

9. The method according to claim 3, wherein the tested object is the second object; and the updating (S103) the attribute information of the detection object according to the test result comprises:
acquiring second abnormal information of the second object, wherein the second abnormal information is marked abnormal information for the second object; and
updating the validity of the detection object according to the first abnormal information and the second abnormal information, and updating the level coefficient and/or the type of the detection object according to the updated validity of the detection object.

10. The method according to claim 2, wherein if the type of the detection object is an offline type, the tested object is a second object, and the second object is an abnormal object.

11. The method according to claim 10, wherein the updating (S103) the attribute information of the detection object according to the test result comprises:
acquiring third abnormal information of the second object, wherein the third abnormal information is marked abnormal information for the second object;
updating the validity of the detection object according to the first abnormal information and the third abnormal information; and
updating the type of the detection object if the updated validity of the detection object is greater than or equal to a fifth threshold.

12. An electronic device (11), comprising:
at least one processor (701); and
a memory (702) communicatively connected with the at least one processor (701); wherein,
the memory (702) stores instructions executable by the at least one processor (701), and the instructions are executed by the at least one processor (701), to cause the at least one processor (701) to execute the method according to any one of claims 1-11.

13. A non-transitory computer readable storage medium storing computer instructions, wherein the computer instructions are configured to cause a computer to execute the method according to any one of claims 1-11.

14. A computer program product, comprising a computer program, wherein the computer program, when executed by a processor, implements the method according to any one of claims 1-11.

## Amended claims

### Amended claims in accordance with Rule 137(2) EPC.

1. An inspection rule updating method, comprising:
acquiring (S101) attribute information of a detection object, wherein the attribute information comprises a type of the detection object and at least one of the following: a level coefficient of the detection object and a validity of the detection object;
determining a tested object according to the type of the detection object, wherein the detection object is an inspection rule for detecting quality of a computer-executable program code, the tested object is the computer-executable program code, the type of the detection object is an online type or an offline type, the detection object being of the online type refers to that the detection object is available for a user to test the quality of the computer-executable program code, the detection object being of the offline type refers to that the detection object is a standby detection object; the level coefficient of the detection object is used for indicating a level of abnormal information detected by the detection object or a level of a user's intention to repair the detected abnormal information, the level coefficient of the detection object is any one of a low level, a middle level and a high level; the validity of the detection object is used for indicating whether the detection object can detect abnormal information of the tested obj ect;
testing (S102) the tested object by the detection object to obtain a test result, wherein the test result comprises first abnormal information detected in the tested object; and
updating (SI03) the attribute information of the detection object according to the test result;
the determining the tested object according to the type of the detection object comprises:
if the type of the detection object is the online type, then determining that the tested object is a first object or a second object, wherein the first object is any to-be-tested object and the second object is an abnormal object; and if the type of the detection object is the offline type, the tested object is the second object;
the updating (S103) the attribute information of the detection object according to the test result comprises:
if the type of the detection object is the online type and the tested object is the first object, updating the type and/or the level coefficient of the detection object according to a user operation corresponding to the first abnormal information;
if the type of the detection object is the online type and the tested object is the second object, updating the type and/or the level coefficient of the detection object according to the first abnormal information and second abnormal information of the second object, wherein the second abnormal information is marked abnormal information for the second object; and
if the type of the detection object is the offline type, updating the type of the detection object according to the first abnormal information and third abnormal information of the second object, wherein the third abnormal information is marked abnormal information for the second object.

2. The method according to claim 1, wherein if the type of the detection object is the online type and the tested object is the first object, the updating the type and/or the level coefficient of the detection object according to the user operation corresponding to the first abnormal information comprises:
acquiring the user operation corresponding to the first abnormal information; and
updating the type and/or the level coefficient of the detection object according to the user operation.

3. The method according to claim 2, wherein the user operation comprises any one of the following operations:
a repair operation corresponding to the first abnormal information;
an operation indicating misreporting of the first abnormal information; and
an operation indicating repair-free of the first abnormal information.

4. The method according to claim 3, wherein the user operation is the repair operation corresponding to the first abnormal information; and the updating the type and the level coefficient of the detection object according to the user operation comprises:
acquiring a repair rate corresponding to the repair operation; and
increasing the level coefficient corresponding to the detection object when the repair rate is greater than or equal to a first threshold and the level coefficient of the detection object is not the high level, wherein the repair rate being greater than or equal to the first threshold indicates that the first abnormal information detected by the detection object is valid and the detection object is of high importance.

5. The method according to claim 3, wherein the user operation is the operation indicating misreporting of the first abnormal information; and the updating the type and the level coefficient of the detection object according to the user operation comprises:
determining an abnormality misreporting rate according to the user operation; and
reducing the level coefficient of the detection object or updating the type of the detection object to an offline type when the abnormality misreporting rate is greater than or equal to a third threshold, wherein the abnormality misreporting rate being greater than or equal to the third threshold indicates that the first abnormal information detected by the detection object is invalid.

6. The method according to claim 3, wherein the user operation is the operation indicating repair-free of the first abnormal information; and the updating the type and the level coefficient of the detection object according to the user operation comprises:
determining a repair-free rate according to the user operation; and
reducing the level coefficient of the detection object or updating the type of the detection object to an offline type when the repair-free rate is greater than or equal to a fourth threshold, wherein the repair-free rate being greater than or equal to the fourth threshold indicates that the detection object is of low importance.

7. The method according to claim 1, wherein if the type of the detection object is the online type and the tested object is the second object, the updating the type and/or the level coefficient of the detection object according to the first abnormal information and the second abnormal information of the second object comprises:
acquiring the second abnormal information of the second object; and
updating the validity of the detection object according to the first abnormal information and the second abnormal information, and updating the level coefficient and/or the type of the detection object according to the updated validity of the detection object.

8. The method according to claim 1, wherein if the type of the detection object is the offline type, the updating the type the detection object according to the first abnormal information and third abnormal information of the second object, the third abnormal information is marked abnormal information for the second object comprises:
acquiring the third abnormal information of the second object;
updating the validity of the detection object according to the first abnormal information and the third abnormal information; and
updating the type of the detection object to the online type if the updated validity of the detection object is greater than or equal to a fifth threshold.

9. An electronic device (11), comprising:
at least one processor (701); and
a memory (702) communicatively connected with the at least one processor (701); wherein,
the memory (702) stores instructions executable by the at least one processor (701), and the instructions are executed by the at least one processor (701), to cause the at least one processor (701) to execute the method according to any one of claims 1-8.

10. A non-transitory computer readable storage medium storing computer instructions, wherein the computer instructions are configured to cause a computer to execute the method according to any one of claims 1-8.

11. A computer program product, comprising a computer program, wherein the computer program, when executed by a processor, implements the method according to any one of claims 1-8.
